# EUROPEAN PATENT SPECIFICATION

(11) **EP 2 610 838 B1**
(45) Date of publication and mention of the grant of the patent: **07.02.2018**
(21) Application number: 12199504.7
(22) Date of filing: 27.12.2012
(51) Int. Cl.: G08G 1/0968, G01C 21/26

(54) **System and method for estimating the most probable path of a vehicle travelling on a road**
System und Verfahren zur Schätzung des wahrscheinlichsten Wegs eines auf einer Straße fahrenden Fahrzeugs
Système et procédé permettant d'estimer le chemin le plus probable d'un véhicule circulant sur une route

(30) Priority: 30.12.2011 IT TO20111243
(43) Date of publication of application: 03.07.2013
(73) Proprietor: Magneti Marelli S.p.A., 20011 Corbetta (MI) (IT)
(72) Inventor: Ghisio, Guido, I-10078 VENARIA REALE (Torino) (IT)
(74) Representative: Deambrogi, Edgardo

(56) References cited:
- EP-A2- 1 111 338
- WO-A1-2010/066718
- DE-A1-102009 024 153
- US-A1- 2007 219 708
- US-A1- 2010 010 733

## Description

The present invention relates in a general way to vehicle driving assistance systems, and more particularly to the determination of the travel probability of sections of a road network and the prediction of the most probable path followed by a vehicle travelling on a road as a function of its location on the road network, for the purpose of controlling the travelling conditions of the vehicle.

More specifically, the present invention relates to a system for estimating the most probable path followed by a vehicle on a road network, according to claim 1. The invention also relates to a method for estimating the most probable path followed by a vehicle on a road network, according to claim 6. There are known on-board systems for estimating or predicting the most probable path followed by a vehicle travelling on a road network, the operation of these systems being based on the assignment of a travel probability to each of a plurality of road sections originating from a road intersection or branching node which can be reached by a vehicle.

The estimation of the most probable path of a travelling vehicle takes place whenever a vehicle, during its travel, approaches a road intersection or branching node which is the point of origin of a plurality of successive road sections along which the vehicle may travel, in the absence of guided navigation data or knowledge of the destination of the vehicle.

The assignment of the travel probabilities of the road sections which are located downstream of the position of the vehicle in the direction of travel, and which originate from an intersection or branch associated with the road section along which the vehicle is currently travelling, takes place empirically according to the type or class of road defined in a cartographic reference map. The travel probabilities assigned to the main roads of a network (such as high-speed roads) are higher than the travel probabilities assigned to secondary or local roads. Unfortunately, the definition of the road classes in a cartographic reference map is a static attribute which is unlikely to reflect the real environment in which a vehicle travels. Typically, the classes may vary between successive editions of the reference map if new road intersection or branching nodes are created, or if the road network is modified in ways affecting existing nodes. Known improvements of the model of assignment of travel probabilities of road sections are based on traffic statistics, with a road section of local or geographic interest being given a higher travel probability if a traffic data element indicates that the number of vehicles travelling along this section is above a predetermined threshold. In this case, the path estimation systems can be integrated into systems for acquiring data in real time on the traffic conditions on the road network or a portion thereof defined in the area of the vehicle's location, thus permitting dynamic updating of the travel probabilities of the road sections to which the traffic data are applicable.

These systems are generally integrated with a location system installed on board a vehicle, and supply information which can be used by the on-board driving assistance systems and control systems, regardless of whether these are dynamic vehicle control systems or systems for controlling the functions of the passenger compartment and bodywork. For example, systems for predicting the most probable path (MPP) of a vehicle supply information for controlling comfortable travelling conditions, for maintaining safety conditions, and for consumption control ("green driving" systems).

DE 10 2009 024 153 A1 describes a method for predicting the road section originating from an intersection or branching node which is most likely to be followed by a travelling vehicle reaching this intersection or branching node, as a function of the type of vehicle, and where no destination has been specified in an on-board navigation device.

Unfortunately, the method described in this document does not allow the advance estimation of the most probable path which comprises a plurality of successive road sections and is sufficiently long to enable the performance of the vehicle to be optimized.

US 2010/0010733 discloses a system for computing a route likelihood based on the driving history of a user with regard to a particular road intersection, which can be collected and retained in storage.

WO 2010/066 718 describes a navigation device comprising a destination suggestion module arranged to determine one or more suggested destinations from a plurality of suggestible destinations based on journey information obtained from a plurality of navigation devices.

The known systems based on the class of road are effective, but the applicant considers that it is possible to improve them further, particularly as regards the possibility of defining the travel probabilities in a more realistic way and allowing these probabilities to be up-dated dynamically, even in the case of a path comprising a plurality of road sections following a first branching node which the vehicle can reach, for the purpose of controlling the vehicle dynamics with a significant spatial horizon in order to enable the performance of the vehicle to be optimized.

The object of the present invention is, therefore, to provide an improved estimate of the most probable path followed by a vehicle, while overcoming the drawbacks of the known art.

According to the present invention, this object is achieved by means of a system having the characteristics claimed in Claim 1.

The invention also proposes a method having the characteristics claimed in claim 6. Specific embodiments are described in the dependent claims, the content of which is to be considered as an integral part of the present description.

Briefly, the present invention is based on the principle of regulating the assignment of the travel probabilities of the sections of a road network originating from a road intersection or branching node as a function of the nature of the territory on which the road network is located, that is to say by means of a model for representing the designated use of the territory in the area of the road intersection or branching node in question. In other words, the assignment of the travel probability according to the invention takes place as a function of the presence of industrial estates, shopping centres, tourist destinations, or meeting places such as arenas or similar facilities for sporting or cultural events or for entertainment in general, on the assumption that the designated use of the areas of the territory on which a road network extends has an effect on traffic flows and provides a more refined, accurate and effective characterization than a representation based solely on road maps, that is to say on parameters representing the road network.

This is because the presence of tourist destinations accessible via secondary roads rather than main roads greatly reduces the reliability of a path prediction at the road branching nodes leading to these destinations where this prediction is based on a model of assignment of the travel probabilities of a road section based solely on the road class of the road sections passing through the area of territory in which these destinations are located.

Furthermore, the presence of major shopping centres or meeting places such as sports facilities or sites hosting public events which attract large numbers of persons causes considerable variation in the traffic conditions in the surrounding area as a function of the opening times of the shopping centre or the date of the events held at the sports facilities or event sites. The presence of these sites affects the traffic flow, even if, in order to access them, it is necessary to leave a main road, take a slip road, and follow secondary access roads of a lower category or class.

The presence of an industrial estate affects the traffic flows, owing to the flows of employees and because of the commercial vehicles in use for delivery and collection operations. In the best case, these centres are located on trunk roads, but they will inevitably have an effect on the increased frequency of travel on slip roads and lower class roads used for access to these centres.

Advantageously, by dynamically assigning the travel probabilities of sections of a road network as a function of the designated uses of the territory and the extent of their effect on routes, which varies over time, it is possible to improve the prediction of the path of a travelling vehicle, and ultimately to increase the efficacy of the driving assistance systems and on-board control systems which incorporate this functionality.

According to the invention, the assignment of probability is dynamically updated at intervals which depend on the characteristics of the designated use of the territory, and therefore it can vary rapidly over time, for example over a day, in the case of a road network in the vicinity of a shopping centre, or slowly, over several months or a year for example, in the case of a tourist destination. The updating frequency can also be highly variable, with intervals of an hour in the case of shopping centres or roads with high traffic intensity leading to locations where large numbers of people gather (such as factories or educational establishments), or intervals of a week in the case of sports or games events, or irregular intervals in the case of occasional events or performances.

By aggregating a time parameter with the designated use of the territory it is possible to define a field of probabilities, the level (value) of which is determined by entities located in a space-time dimension.

According to another aspect of the invention, the updating of the probability assignment can be a function of the current traffic conditions present on a portion of the road network.

According to a further aspect of the invention, the updating of the probability assignment can be dependent on temporary changes to the road traffic network, such as those due to the presence of roadworks or long-term interruptions of traffic.

According to yet another aspect of the invention, the system proposed by the invention can store a path history, for example a path followed regularly at predetermined points in time, such as a frequent path followed by the vehicle, or by its driver who is recognized by a personal identification system, in order to reach a customary place of work or meeting place, and can allow for this behaviour in the model of assignment of the travel probabilities and ultimately in the estimation of the path.

The system proposed by the invention can also modify the assignment of the travel probabilities of the road sections as a function of objective data concerning the manoeuvring or intended manoeuvring of the vehicle, for example where the driver operates a direction indicator to signal his intention to turn in the proximity of a road intersection node. Preferably, the dynamics of the vehicle or the engine control functions, such as the gear grading or vehicle deceleration, are taken into consideration as well as the passenger compartment functions, and are interpreted as manoeuvring data.

The updates of the probabilities assigned to the sections of the road network can be acquired by radio from a central station for processing the integrated map and territory data, or can be calculated locally in an on-board processing unit on the basis of the locally stored map and territory data and any supplementary data on current traffic conditions acquired by means of a dedicated communications system.

Further characteristics and advantages of the invention will be disclosed more fully in the following detailed description of one embodiment of the invention, provided by way of non-limiting example, with reference to the attached drawings, in which:

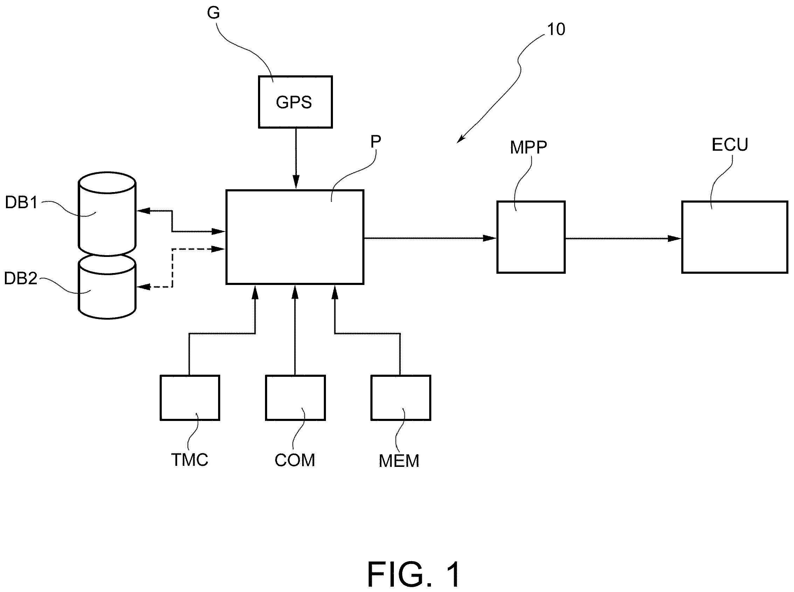

Figure 1 shows a block diagram of a system for estimating the most probable path followed by a vehicle on a road network, as proposed by the invention;
Figure 2 is a flow diagram of a method for estimating the most probable path followed by a vehicle on a road network, as proposed by the invention; and
Figures 3a-3c show schematically how travel probabilities are assigned to each of a plurality of road sections originating from a road intersection or branching node which can be reached by a vehicle.

An on-board system for estimating the most probable path followed by a vehicle on a road network is indicated as a whole by the number 10.

A processing unit P is connected to a first database DB1 comprising a cartographic map of a road network, represented in the form of a connected vector graph including road intersection or branching nodes and connecting arcs between these nodes, structured on hierarchical levels according to the known art. In particular, the database DB1 can store data indicative of the classes of road segments located between the intersection or branching nodes. An intersection or branching node is a point on the road network to which a plurality of roads lead or from which they depart, the roads being of the same class or different classes, where the route may be regulated by road infrastructure (such as roundabouts or slip roads), or traffic lights or signs indicating precedence.

A second database DB2 comprises a geographic map of a territory in which the road network stored in the database DB 1 extends, represented in the form of a matrix of data indicative of the designated use of specified areas of territory which can be reached by the road segments identified in the map. For example, the database DB2 comprises, for each area of territory defined by a boundary or reference centre, a field indicative of the designated use or category of the meeting point (for example, shopping centre, educational establishment, sports centre, or tourist destination) and a field indicative of a value of attraction of this area of territory, expressed as a function of time if appropriate.

In a possible embodiment, the database DB2 is stored in a storing medium which is independent of the database DB1, and which can also be accessed by the processing unit P. In an alternative possible embodiment, the database DB2 is integrated with the database DB1, for example in the form of a further data level, to provide enhanced map data. The values of travel probability are stored (in a fixed form or using an analytical formula as a function of time) in the cartographic map and territorial database, or are calculated by the processing unit on the basis of the values of attraction of the areas of territory, or are calculated remotely and communicated to the vehicle by means of the on-board communications system.

The processing unit is also connected to a vehicle location system G, such as a satellite location system (GPS) installed on the vehicle, or alternatively a satellite location system integrated into a portable personal device such as a smartphone, which is temporarily on board the vehicle.

Advantageously, the processing unit P is also connected (directly or through an on-board communications network such as a CAN network, which is not shown) to a radio communications receiver subsystem TMC, for example one which can receive traffic data in real time or data indicative of the temporary modifications of the road traffic network; to a subsystem for checking the on-board commands COM, for example one which can detect objective data on the manoeuvring or intended manoeuvring of the vehicle such as the operation of a direction indicator device to signal an intention to turn in the proximity of a road intersection node, or data indicative of the dynamics of the vehicle or of the engine control functions; and to a storage subsystem MEM which can record a path history, for example a path followed regularly in predetermined moments of time which can be associated with the vehicle or its driver who is recognized by a personal identification system.

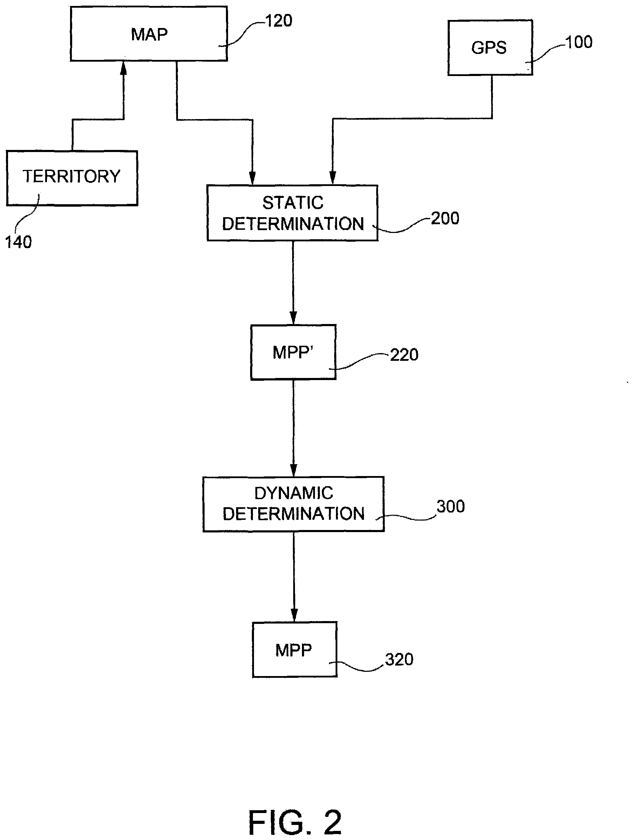

With additional reference to the steps of operation shown schematically in the flow diagram of Figure 2, the processing unit P is arranged (programmed) to acquire the data indicative of the travel probability of the road sections which originate from an intersection node approached by the vehicle, on the basis of the vehicle location data (acquired in step 100) and on the basis of cartographic road map data (acquired in step 120) and data on the designated use of the territory (acquired in step 140, independently of the acquisition of the road map, or before the acquisition of the road map data, in the case of integration into a single enhanced map database), available in the databases DB 1 and DB2 respectively.

The processing unit P is also arranged (programmed) to assign a travel probability, or to modify an acquired travel probability, as a function of the data on the designated use of the territory, if these are not integrated into a single map database. The step is shown as the "static determination" of the probabilities in step 200, since it is based on probability assignment parameters which are predefined or slowly variable (updatable at low frequency).

In the remainder of the description, the predetermined travel probabilities based on the road class are termed "default probabilities", while the travel probabilities determined (additionally) on the basis of the designated use of the territory, according to the invention, are termed "improved probabilities".

On the basis of the improved probabilities assigned to the road sections, the processing unit P is arranged (programmed) to determine the most probable path MPP' for the vehicle, in step 220. The most probable path comprises a sequence formed by a predetermined number of consecutive road sections, for which there is the highest joint probability of travel on all possible combinations of said predetermined number of consecutive road sections which originate in the intersection or branching node which the vehicle is approaching. The system proposed by the invention determines the most probable path by linking a number of consecutive road sections, preferably by linking a number of consecutive road sections equal to five, or even more preferably a number of consecutive road sections which is variable as a function of the density of the intersection nodes on the territory, or of other parameters.

On the basis of the improved probabilities, the processing unit P is arranged (programmed) to modify the probability values further as a function of the data obtained from the subsystems TMC, COM and MEM, thus obtaining "enhanced probability" values. The step is shown as the "dynamic determination" of the probabilities in step 300, since it is based on probability assignment parameters which are not known in advance, but are recalculated as a function of specific, rapidly variable events such as changes in traffic conditions, objective manoeuvres by the driver, or entry on to a historic path.

Specifically, in accordance with the traffic data or data indicative of temporary modifications to the road traffic network received by the TMC subsystem, the processing unit is arranged to assign lower enhanced travel probabilities for road sections on which excessive vehicular traffic or travel times above the mean are detected, which might induce the driver to deviate from the main roads.

In accordance with the objective data on the manoeuvring or intended manoeuvring of the vehicle received by the COM subsystem, the processing unit is arranged to assign higher enhanced travel probabilities to road sections towards which the vehicle is manoeuvring.

In accordance with a path history and the corresponding moment of time received by the MEM subsystem, the processing unit is arranged to assign higher enhanced travel probabilities to road sections included in a habitual path.

On the basis of the enhanced probabilities assigned to the road sections, the processing unit P is arranged (programmed) to determine the most probable path MPP for the vehicle, in step 320.

The most probable path MPP is made available at the input of a control module of a driving assistance system or on-board control system, indicated in a general way by ECU.

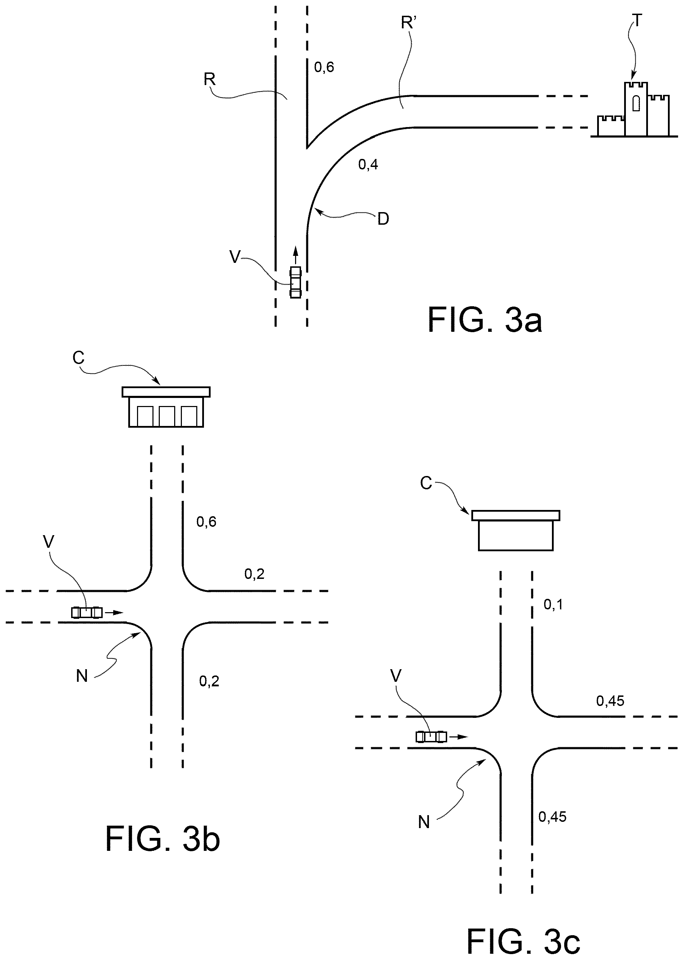

The method proposed by the invention will be more fully described with examples drawn from practical cases, with reference to Figures 3a-3c.

Figure 3a shows a road branch point D comprising a portion of secondary road R' originating from a main road R along which a vehicle V is travelling.

The on-board location system supplies the position of the vehicle on the road network to the central processing unit of the path prediction system. The central processing unit acquires the travel probability data assigned to the sections R and R' following the branch point D (and typically the probability data of a road network travel tree originating from the branch point D, for a depth of several sections, for example five consecutive sections connected by intersection or branching nodes).

According to a prior art model in which the probability is assigned solely on the basis of the road classes, it can be assumed that the main road R has a higher travel probability, for example 0.8, than the secondary road R', which has the remaining probability 0.2.

On the other hand, the model for assigning the travel probabilities proposed by the invention takes into consideration the designated use of the territory through which the road network passes. In view of the presence of a tourist site T which is near the branch point D and can be reached along the road section R', the static probabilities assigned to the sections R, R' are modified and reassigned in a more correct manner; for example, a probability of 0.6 is assigned to travel along the main road R and a smaller, but not negligible, probability of 0.4 is assigned to travel along the secondary road R'.

Figures 3b and 3c show a road intersection node N to which there lead a first road R1 with a vehicle V travelling along it, a second road R2, a third road R3 and a fourth road R4. In a simplified case assumed here, all the roads are of the same class. Whereas the road R2 leads only to a shopping centre, roads R3 and R4 lead to residential areas.

The on-board location system supplies the position of the vehicle on the road network to the central processing unit of the path prediction system. The central processing unit acquires the travel probability data assigned to the sections R2, R3 and R4 following the intersection N for the vehicle V arriving from road R1 (and typically the probability data of a road network travel tree originating from the intersection N, for a depth of several sections, for example five consecutive sections connected by intersection or branching nodes).

The presence of the shopping centre C is a parameter of the designated use of the territory. The open or closed condition of the shopping centre causes a dynamic change in the designated use of the territorial areas served by the roads R2, R3 and R4. Figure 3b shows the travel probabilities assigned to the roads R2, R3 and R4 during the opening hours of the shopping centre C. The section R2 has a travel probability which is equal to 0.6, for example, and is substantially greater than the travel probabilities of the sections R3 and R4, each of which is equal to 0.2. Figure 3c shows the travel probabilities assigned to the roads R2, R3 and R4 during the closed hours of the shopping centre C. The section R2 has a marginal travel probability, equal to 0.1 for example, which is substantially smaller than the travel probabilities of the sections R3 and R4, each of which is equal to 0.45.

According to the invention, the assigned probability data are modified in real time in the travel probabilities database of the system, on the basis of known information on the opening and closing hours of the shopping centre, stored in an auxiliary archive of the system or received by an on-board communications system via an active periodic updating service supplied, for example, by a known system for broadcasting traffic information from network infrastructures to vehicles.

Therefore, the model for assigning the travel probabilities proposed by the invention takes into consideration the designated use of the territory through which the road network passes and the dynamics of the variation of this use over time.

Naturally, the principle of the invention remaining the same, the forms of embodiment and details of construction may be varied widely with respect to those described and illustrated, which have been given purely by way of non-limiting example, without thereby departing from the scope of protection of the present invention as defined by the attached claims.

## Claims

1. System for estimating the most probable path followed by a vehicle (V) on a road network including road sections (R, R') originating from respective intersection or branching nodes (N; D), to which a travel probability is assigned, comprising:
- means (G) for acquiring a data element for locating the vehicle on the road network;
- means (DB1, DB2) for storing a map of the territory through which the road network passes, comprising data representative of the corresponding designated use of a plurality of areas of territory associated with the sections (R, R') of the road network; and
- processing means (P) arranged to assign improved travelling probabilities to the road sections (R; R') of the road network originating from the respective road intersections or branching nodes (N; D), as a function of the designated use of the area of territory associated with said road sections (R; R'),
**characterised in that**
the processing means (P) are arranged to calculate the most probable path for the vehicle (V) according to the improved travelling probabilities assigned to said road sections (R; R'), said most probable path comprising a plurality of consecutive road sections originating from a road intersection or branching node (N; D) approached by the vehicle (V) for which the joint travel probability is highest, and
**in that** said processing means (P) are arranged to assign an improved travel probability for a road section (R; R') which is variable in time as a function of the state of operation of at least one site (C; T) in an area of territory associated therewith, said probability being assigned depending on the time at which the vehicle (V) approaches said section (R; R').

2. System according to Claim 1, wherein said processing means (P) are arranged to calculate an improved travel probability for a road section (R; R') as a function of the presence of at least one site (C; T) in an area of territory associated therewith, belonging to the group of sites comprising industrial estates, shopping centres (C), tourist destinations (T) and meeting places.

3. System according to any of the preceding claims, comprising communication means (TMC) adapted to receive signals indicative of the current traffic conditions on at least a portion of said road network, wherein said processing means (P) are arranged to assign enhanced travel probabilities of said road sections (R; R') by modifying said improved probabilities as a function of said current traffic conditions and to calculate the most probable path on the basis of the enhanced travel probabilities.

4. System according to any of the preceding claims, comprising means (MEM) for storing a path history associated with the vehicle or with a driver, wherein said processing means (P) are arranged to assign enhanced travel probabilities of said road sections (R; R') by modifying said improved probabilities as a function of said path history and to calculate the most probable path on the basis of the enhanced travel probabilities.

5. System according to any of the preceding claims, comprising means (COM) for acquiring signals indicative of a manoeuvre of the vehicle (V), wherein said processing means (P) are arranged to assign enhanced travel probabilities of said road sections (R; R') by modifying said improved probabilities as a function of objective data indicative of said manoeuvre of the vehicle (V) and to calculate the most probable path on the basis of the enhanced travel probabilities.

6. Method for estimating the most probable path followed by a vehicle (V) on a road network including road sections (R, R'), originating from respective intersection or branching nodes (N; D), to which a travel probability is assigned, comprising the operations of:
- assigning (200) improved travel probabilities to sections (R; R') of the road network as a function of the corresponding designated use of a plurality of areas of territory associated with said sections (R; R'); and
- acquiring (100) data for locating the vehicle on the road network;
**characterised in that** it further comprises the steps of:
- assigning an improved travel probability for a road section (R; R') which is variable in time as a function of the state of operation of at least one site (C; T) in an area of territory associated therewith, said probability being assigned depending on the time at which the vehicle (V) approaches said section (R; R'); and
- calculating (200) the most probable path according to the improved travel probabilities assigned to said road sections (R; R'), said most probable path comprising a plurality of consecutive road sections, originating from a road intersection or branching node (N; D) approached by the vehicle (V), for which the joint travel probability is highest.

7. Method according to Claim 6, comprising the operation of assigning (300) enhanced travel probabilities for said road sections (R; R') by modifying said improved probabilities as a function of current traffic conditions; and wherein calculating the most probable path is done on the basis of the enhanced travel probabilities.

8. Method according to Claim 6, comprising the operation of assigning (300) enhanced travel probabilities for said road sections (R; R') by modifying said improved probabilities as a function of path history associated with the vehicle or with a driver; and wherein calculating the most probable path is done on the basis of the enhanced travel probabilities.

9. Method according to Claim 6, comprising the operation of assigning (300) enhanced travel probabilities of said road sections (R; R') by modifying said improved probabilities as a function of objective data indicative of a manoeuvre of the vehicle; and wherein calculating the most probable path is done on the basis of the enhanced travel probabilities.

## Patentansprüche

1. System für die Schätzung des wahrscheinlichsten Weges, den ein Fahrzeug (V) in einem Straßennetz verfolgt, das Straßenabschnitte (R, R') umfasst, die von einer jeweiligen Kreuzung oder von Knotenpunkten (N; D) ausgehen, zu denen eine Reisewahrscheinlichkeit zugewiesen wurde, bestehend aus:
- Vorrichtungen (G) für die Erfassung eines Datenelements zur Ortung des Fahrzeugs in dem Straßennetz;
- Vorrichtungen (DB1, DB2) für das Abspeichern einer Karte des Gebiets des Straßennetzes, welches durchquert wird, bestehend aus Daten, welche repräsentativ sind für eine entsprechende bestimmungsgemäße Verwendung in Verbindung mit einer Vielzahl von Gebieten im Zusammenhang mit den Abschnitten (R, R') des Straßennetzes; und
- Verarbeitungsvorrichtungen (P), die so angeordnet sind, um verbesserte Reisewahrscheinlichkeiten den jeweiligen Straßenabschnitten (R; R') des Straßennetzes zuzuweisen, die von einer dieser jeweiligen Kreuzungen oder jeweiligen Knotenpunkten (N; D) ausgehen, in Abhängigkeit vom Verwendungszweck des Gebietes, das mit den zugewiesenen oben genannten Straßenabschnitten (R; R') im Zusammenhang steht,
**dadurch gekennzeichnet, dass**
die Verarbeitungsvorrichtungen (P) so angeordnet sind, um den wahrscheinlichsten Weg für das Fahrzeug (V) entsprechend der verbesserten Reisewahrscheinlichkeiten zu berechnen, welche den genannten Straßenabschnitten (R; R') zugewiesen wurden, wobei dieser wahrscheinlichste Weg eine Vielzahl von aufeinander folgenden Straßenabschnitten umfasst, die von einer Straßenkreuzung oder von Knotenpunkten (N; D) ausgehen, denen sich das Fahrzeug (V) auf dem Reiseweg mit der höchsten Wahrscheinlichkeit annähert, und
ferner **dadurch gekennzeichnet, dass** besagte Verarbeitungsvorrichtungen (P) so angeordnet sind, um eine verbesserte Reisewahrscheinlichkeit für einen Straßenabschnitt (R; R') zuzuweisen, wobei dieser wahrscheinlichste Weg zeitvariabel vom Betriebszustand von mindestens einem Standort (C; T) abhängt, der in einem damit verbundenen Gebiet zugewiesen ist, und die besagte zugewiesene Wahrscheinlichkeit hängt von dem Zeitraum ab, in welchem das Fahrzeug (V) sich dem Straßenabschnitt (R; R') nähert.

2. System nach Anspruch 1, wobei die besagten Verarbeitungsvorrichtungen (P) so angeordnet sind, um eine verbesserte Reisewahrscheinlichkeit für einen Straßenabschnitt (R; R') in Abhängigkeit von der Anwesenheit von mindestens einem Standort (C; T) in einem damit verbundenen Gebiet zu berechnen, wobei es sich bei den damit verbundenen Standorten um Gewerbegebiete, Einkaufszentren (C), touristische Reiseziele (T) und Treffpunkte handelt.

3. System nach einem der vorhergehenden Ansprüche, bestehend aus Kommunikationsmitteln (TMC), die so angepasst wurden, um Signale über die aktuelle Verkehrssituation für zumindest einen Teil des besagten Straßennetzes zu empfangen, wobei besagte Verarbeitungsvorrichtungen (P) so angeordnet sind, um verbesserte Reisewahrscheinlichkeiten für besagte Straßenabschnitte (R; R') zuzuweisen, indem die besagten verbesserte Wahrscheinlichkeiten eine Funktion der besagten aktuellen Verkehrssituation sind und die besagten Verarbeitungsvorrichtungen den wahrscheinlichsten Weg auf der Grundlage der erweiterten Reisewahrscheinlichkeiten berechnen.

4. System nach einem der vorhergehenden Ansprüche, bestehend aus Vorrichtungen (MEM) für das Abspeichern von Wegverläufen mit dem Fahrzeug oder dem Fahrer, wobei besagte Verarbeitungsvorrichtungen (P) so angeordnet sind, um verbesserte Reisewahrscheinlichkeiten für einen Straßenabschnitt (R; R') zuzuweisen, indem die besagten verbesserten Wahrscheinlichkeiten eine Funktion der besagten Wegverläufe sind und die besagten Verarbeitungsvorrichtungen den wahrscheinlichsten Weg auf der Grundlage der erweiterten Reisewahrscheinlichkeiten berechnen.

5. System nach einem der vorhergehenden Ansprüche, bestehend aus Vorrichtungen (COM) für die Erfassung von Signalen, die einem Manöver des Fahrzeugs (V) entsprechen, wobei die besagten Verarbeitungsvorrichtungen (P) so angeordnet sind, um eine verbesserte Reisewahrscheinlichkeit für die besagten Straßenabschnitte (R; R') zuzuweisen, indem die besagten verbesserten Wahrscheinlichkeiten eine Funktion der objektiven Daten sind, welche dem besagten Manöver des Fahrzeugs (V) entsprechen und die besagten Verarbeitungsvorrichtungen den wahrscheinlichsten Weg auf der Grundlage der erweiterten Reisewahrscheinlichkeiten berechnen.

6. Methode für die Schätzung des wahrscheinlichsten Weges, den ein Fahrzeug (V) in einem Straßennetz verfolgt, das Straßenabschnitte (R, R') umfasst, die von einer jeweiligen Kreuzung oder von Knotenpunkten (N; D) ausgehen, zu denen eine Reisewahrscheinlichkeit zugewiesen wurde, bestehend aus:
- der Zuweisung (200) von verbesserten Reisewahrscheinlichkeiten zu jeweiligen Straßenabschnitten (R; R') des Straßennetzes als eine Funktion der entsprechenden bestimmungsgemäßen Verwendung in Verbindung mit einer Vielzahl von Gebieten im Zusammenhang mit den besagten Straßenabschnitten (R, R'); und
- der Erfassung (100) von Daten zur Ortung des Fahrzeugs in dem Straßennetz;
**dadurch gekennzeichnet, dass** das System ferner die folgenden Schritte umfasst:
- Zuweisung einer verbesserten Reisewahrscheinlichkeit für einen Straßenabschnitt (R; R'), wobei dieser wahrscheinlichste Weg zeitvariabel vom Betriebszustand von mindestens einem Standort (C; T) abhängt, der in einem damit verbundenen Gebiet zugewiesen ist, und die besagte zugewiesene Wahrscheinlichkeit hängt von dem Zeitraum ab, in welchem das Fahrzeug (V) sich dem Straßenabschnitt (R; R') nähert; und
- Berechnung (200) des wahrscheinlichsten Weges entsprechend der verbesserten Reisewahrscheinlichkeiten, welche den besagten Straßenabschnitten (R; R') zugewiesen wurden, wobei dieser wahrscheinlichste Weg eine Vielzahl von aufeinander folgenden Straßenabschnitten umfasst, die von einer Straßenkreuzung oder von Knotenpunkten (N; D) ausgehen, denen sich das Fahrzeug (V) auf dem Reiseweg mit der höchsten Wahrscheinlichkeit annähert.

7. Verfahren nach Anspruch 6, bestehend aus dem Vorgang der Zuweisung (300) von verbesserten Reisewahrscheinlichkeiten für die besagten Straßenabschnitte (R; R'), indem die besagten verbesserten Wahrscheinlichkeiten als eine Funktion der aktuellen Verkehrssituation abgeändert werden und der wahrscheinlichste Weg auf der Grundlage der erweiterten Reisewahrscheinlichkeiten berechnet wird.

8. Verfahren nach Anspruch 6, bestehend aus dem Vorgang der Zuweisung (300) von verbesserten Reisewahrscheinlichkeiten für die besagten Straßenabschnitte (R; R'), indem die besagten verbesserten Wahrscheinlichkeiten als eine Funktion der besagten Wegverläufe mit dem Fahrzeug oder einem Fahrer abgeändert werden; wobei der wahrscheinlichste Weg auf der Grundlage der erweiterten Reisewahrscheinlichkeiten berechnet wird.

9. Verfahren nach Anspruch 6, bestehend aus dem Vorgang der Zuweisung (300) von verbesserten Reisewahrscheinlichkeiten für die besagten Straßenabschnitte (R; R'), indem die besagten verbesserten Wahrscheinlichkeiten eine Funktion der objektiven Daten sind, welche dem besagten Manöver des Fahrzeugs entsprechen; wobei der wahrscheinlichste Weg auf der Grundlage der erweiterten Reisewahrscheinlichkeiten berechnet wird.

## Revendications

1. Système pour estimer le chemin le plus probable suivi par un véhicule (V) sur un réseau routier comportant des sections de route (R, R') émanant de noeuds d'intersection ou de ramification respectifs (N ; D), auxquels une probabilité de trajet est attribuée, comprenant :
- des moyens (G) pour acquérir un élément de données pour localiser le véhicule sur le réseau routier ;
- des moyens (DB1, DB2) pour stocker une carte du territoire à travers lequel passe le réseau routier, comprenant des données respectives de l'utilisation prévue correspondante d'une pluralité de zones d'un territoire associée aux sections (R, R') du réseau routier ; et
- des moyens de traitement (P) agencés pour attribuer des probabilités de voyage améliorées aux sections de route (R ; R') du réseau routier émanant des intersections de route ou des noeuds de ramification respectifs (N ; D), en fonction de l'utilisation prévue de la zone du territoire associée auxdites sections de route (R ; R'),
**caractérisé en ce que**
les moyens de traitement (P) sont agencés pour calculer le chemin le plus probable pour le véhicule (V) selon les probabilités de voyage améliorées attribuées auxdites section de route (R ; R'), ledit chemin le plus probable comprenant une pluralité de sections de route consécutives émanant d'une intersection de route ou d'un noeud de ramification (N ; D) abordé par le véhicule (V) pour lequel la probabilité de trajet jointe est la plus forte, et
et **en ce que** lesdits moyens de traitement (P) sont agencés pour attribuer une probabilité de trajet améliorée pour une section de route (R ; R') qui varie dans le temps en fonction de l'état de fonctionnement d'au moins un site (C ; T) dans une zone du territoire associée avec celui-ci, ladite probabilité étant attribuée en fonction du moment où le véhicule (V) aborde ladite section (R ; R').

2. Système selon la revendication 1, dans lequel lesdits moyens de traitement (P) sont agencés pour calculer une probabilité de trajet améliorée pour une section de route (R ; R') en fonction de la présence d'au moins un site (C ; T) dans une zone de territoire associée avec celui-ci, appartenant au groupe de sites comprenant des zones industrielles, des centres commerciaux (C), des destinations touristiques (T) et des lieux de rassemblement.

3. Système selon l'une quelconque des revendications précédentes, comprenant des moyens de communication (TMC) adaptés pour recevoir des signaux indiquant les conditions de trafic actuelles sur au moins une partie dudit réseau routier, dans lequel lesdits moyens de traitement (P) sont agencés pour attribuer des probabilités de trajet accrues desdites sections de route (R ;R') en modifiant lesdites probabilités améliorées en fonction desdites conditions de trafic actuelles et pour calculer le chemin le plus probable sur la base des probabilités de trajet accrues.

4. Système selon l'une quelconque des revendications précédentes, comprenant des moyens (MEM) pour stocker un historique de chemin associé avec le véhicule ou avec un conducteur, dans lequel lesdits moyens de traitement (P) sont agencés pour attribuer des probabilités de trajet accrues desdites sections de route (R ; R') en modifiant lesdites probabilités améliorées en fonction dudit historique de chemin et pour calculer le chemin le plus probable sur la base des probabilités de trajet accrues.

5. Système selon l'une quelconque des revendications précédentes, comprenant des moyens (COM) pour acquérir des signaux indicatifs d'une manoeuvre du véhicule (V), dans lequel lesdits moyens de traitement (P) sont agencés pour attribuer des probabilités de trajet accrues desdites sections de route (R ; R') en modifiant lesdites probabilités améliorées en fonction de données objectives indicatives de ladite manoeuvre du véhicule (V) et pour calculer le chemin le plus probable sur la base des probabilités de trajet accrues.

6. Procédé pour estimer le chemin le plus probable suivi par un véhicule (V) sur un réseau routier comportant des sections de route (R, R'), émanant de noeuds d'intersection ou de ramification respectifs (N ; D), auxquels une probabilité de trajet est attribuée, comprenant les opérations suivantes :
- l'attribution (200) de probabilités de trajet améliorées à des sections (R ; R') du réseau routier en fonction de l'utilisation prévue correspondante d'une pluralité de zones de territoire associée avec lesdites sections (R ; R') ; et
- l'acquisition (100) de données pour localiser le véhicule sur le réseau routier ;
**caractérisé en ce qu'**il comprend en outre les étapes suivantes :
- l'attribution d'une probabilité de trajet améliorée pour une section de route (R ; R') qui varie dans le temps en fonction de l'état de fonctionnement d'au moins un site (C ; T) dans une zone du territoire associée avec celui-ci, ladite probabilité étant attribuée en fonction du moment où le véhicule (V) aborde ladite section (R ; R') ; et
- le calcul (200) du chemin le plus probable selon les probabilités de trajet améliorées attribuées auxdites sections de route (R ; R'), ledit chemin le plus probable comprenant une pluralité de sections de route consécutives, émanant d'une intersection de route ou d'un noeud de ramification (N ; D) abordé par le véhicule (V), pour lequel la probabilité de trajet jointe est la plus forte.

7. Procédé selon la revendication 6, comprenant l'opération d'attribution (300) de probabilités de trajet accrues pour lesdites sections de route (R ; R') en modifiant lesdites probabilités améliorées en fonction de conditions de trafic actuelles ; et dans lequel le calcul du chemin le plus probable est réalisé sur la base des probabilités de trajet améliorées.

8. Procédé selon la revendication 6, comprenant l'opération d'attribution (300) de probabilités de trajet accrues pour lesdites sections de route (R ; R') en modifiant lesdites probabilités améliorées en fonction d'un historique de chemin associé avec le véhicule ou avec un conducteur ; et dans lequel le calcul du chemin le plus probable est réalisé sur la base des probabilités de trajet accrues.

9. Procédé selon la revendication 6, comprenant l'opération d'attribution (300) de probabilités de trajet accrues desdites sections de routes (R ; R') en modifiant lesdites probabilités améliorées en fonction de données objectives indicatives d'une manoeuvre du véhicule ; et dans lequel le calcul du chemin le plus probable est réalisé sur la base des probabilités de trajet accrues.
